# EUROPÄISCHE PATENTSCHRIFT

(11) **EP 0 584 576 B1**
(45) Veröffentlichungstag und Bekanntmachung des Hinweises auf die Patenterteilung: **11.10.1995**
(21) Anmeldenummer: 93112214.7
(22) Anmeldetag: 30.07.1993
(51) Int. Cl.: B62D 25/08

(54) **Kraftfahrzeug in Modulbauweise**
Motor vehicle in modular construction
Véhicule à moteur en construction modulaire

(30) Priorität: 25.08.1992 DE 4228120
(43) Veröffentlichungstag der Anmeldung: 02.03.1994
(73) Patentinhaber: Adam Opel Aktiengesellschaft, 65428 Rüsselsheim (DE)
(72) Erfinder: Brandel, Klaus, D-55118 Mainz (DE); Pache, Hans-Jürgen, D-65468 Trebur (DE)
(74) Vertreter: Kümpfel, Heinz, Dipl.-Ing.

(56) Entgegenhaltungen:
- DE-A- 3 315 646
- FR-A- 2 618 746
- FR-A- 2 622 167

## Beschreibung

Die Erfindung betrifft ein Kraftfahrzeug in Modulbauweise, bei dem ein Frontmodul eine Fahrgastzelle nach vorn abschließt, das Frontmodul und die Fahrgastzelle punktuell kraftschlüssig miteinander verbunden sind und das Frontmodul zumindest die am vorderen Teil des Fahrzeuges untergebrachten Fahrwerks- und Bedienungsaggregate enthält.

Ein Kraftfahrzeug dieser Art ist mit GB-P 567 975 beschrieben und dargestellt. Bei diesem Kraftfahrzeug sind sowohl ein Frontmodul als auch ein Heckmodul durch ebene quer zur Fahrzeuglängsrichtung verlaufende Trennflächen von einem mittleren Fahrzeugkörper abgeteilt. Lediglich Zapfen an den Modulen und entsprechende Zapfenlöcher am mittleren Fahrzeugkörper stellen einen Formschluß zwischen diesen Sektionen her, während in der Nähe dieser Zapfen angeordnete Spannschrauben den notwendigen Kraftschluß aufbringen. Eine solche Bauweise ist nur bei Nutzkraftwagen möglich, bei denen eine komplette Fahrerhauszelle abgetrennt werden kann. Bei Personenkraftwagen, bei denen sowohl Fahrer als auch Mitfahrer in einer gemeinsamen Fahrgastzelle untergebracht sind, ist eine derartige glattflächige Teilung von Modulen nicht möglich.

Mit der CH-PS 295 873 ist ein Personenkraftwagen beschrieben, welcher aus einem biege- und verdrehsteifen Wagenkasten, dem vorderen Fahrwerk, dem hinteren Fahrwerk sowie einer vorderen und einer hinteren Abschlußverkleidung besteht. Dabei soll der Wagenkasten vorn und hinten durch Endwände bzw. Öffnungen mit verstärkten Kanten begrenzt sein. Die Trennflächen können eben sein, aber auch gekrümmt bzw. geknickt sein und zwischen Wagenkasten und Fahrwerken werden Dreipunktverbindungen vorgeschlagen, die als Steck- oder Schraubverbindungen ausgeführt sind. Bei einem Kraftfahrzeug dieser Art haben die Bauteile des Wagenkastens allein alle auftretenden Kräfte zu übertragen. Die als Modul angesetzten Fahrwerke sowie die Verkleidungen nehmen daran nicht teil. Bei der punktuellen Übertragung der Kräfte von einem Modul zum anderen sind die Kräfte an den Krafteinleitungspunkten zwar genau bestimmbar, die allein kraftaufnehmenden Bauteile müssen aber entsprechend stark dimensioniert werden. Dies führt zu einem hohen Fahrzeuggewicht mit den daraus folgenden Nachteilen.

Um auch bei Modulbauweise eine lineare Kraftübertragung realisieren zu können, ist es bekannt (DE 33 15 646), an Begrenzungslinien des einen Moduls eine U-förmige Rinne als Klebstoffträger vorzusehen, in welche Klebekanten des anderen Moduls eingelegt werden. Nach Aushärten des Klebers wird so eine lineare Kraftübertragung von einem Modul zum anderen erzielt. Damit kann bei Gewinn an Festigkeit und Steifigkeit erheblich Gewicht gespart werden. Derartige Verbindungen, die zusätzlich auch durch Schrauben punktuell gesichert sein können, sind jedoch bisher lediglich zwischen solchen Baueinheiten verwendet worden, die als funktional zusammengehörige Gruppe modular vormontiert waren, um dann als mittragendes Element in den eigentlich tragenden Fahrzeugkörper eingesetzt zu werden.

Aufgabe der vorliegenden Erfindung dagegen ist es, ein Kraftfahrzeug in Modulbauweise zu schaffen, dessen Frontmodul neben der Zusammenfassung der Frontaggregate auch tragende Funktionen der Fahrgastzelle übernimmt und damit bei der Funktion des Fahrzeuges die Modul-Struktur nicht mehr in Erscheinung tritt.

Erfindungsgemäß wird diese Aufgabe dadurch gelöst, daß das Frontmodul den Bereich von Unterkante Windschutzscheibe bis in den Bereich des Bodens der Fahrgastzelle einschließlich des vorderen Bodens und der darauf befindlichen vorderen Sitze umfaßt, der Begrenzungsrand des Bodenteils des Frontmoduls sowie seitliche Ränder, die sich vom Bodenteil zum Bereich der unteren Ecken der Windschutzscheibenöffnung erstrecken, mit der Fahrgastzelle in an sich bekannter Weise mit einem entlang des Begrenzungsrandes und der seitlichen Ränder verlaufenden Steg in einen mit der Fahrgastzelle verbundenen Klebekanal eingreifen und mittels darin eingelagertem Kleber verklebt sind.

Der den Bodenteil umfassende Steg sowie der dazugehörige Teil des an der Fahrgastzelle befindlichen Klebekanals sind vorzugsweise in einer Ebene angeordnet und in Draufsicht kreisbogenförmig ausgeführt, wobei sich der Kreisbogen von den unteren Begrenzungen der seitlichen Ränder in den Boden der Fahrgastzelle erstreckt.

Der Bodenteil kann anstelle einer kreisbogenförmigen Draufsicht auch trapezförmig sein, wobei sich die größere Basis des Trapezes zwischen den unteren Begrenzungen der seitlichen Ränder befindet, während die kleinere Basis im Boden der Fahrgastzelle liegt und so die Seiten dieses Trapezes keilförmig in den Boden reichen.

Beide dieser vorzugsweise genannten Ausführungsformen ermöglichen das Einsetzen des Steges des Bodenteils in den Klebekanal des Bodens innerhalb eines kurzen Montageweges. Dadurch wird die Montage des Frontmoduls mit der Fahrgastzelle insgesamt vereinfacht und die Gefahr des Austretens von Klebstoff aus dem Klebekanal wird verringert. Ein in Draufsicht kreisbogenförmiger Steg und Klebekanal ermöglichen einen problemlosen Ausgleich von Winkeltoleranzen zwischen dem Frontmodul und der Fahrgastzelle, in dem die beiden Module innerhalb des Kreisbogens gegeneinander gedreht werden können. Damit können unabhängig von Fertigungstoleranzen beide seitlichen Ränder gleichermaßen in Eingriff mit den ihnen zugeordneten Klebekanälen gebracht werden.

Auf dem hinteren Ende des sich in die Fahrgastzelle erstreckenden Bodenteils des Frontmoduls ist zweckmäßigerweise ein Querträger befestigt, der seitlich das Bodenteil überragt und mit den überragenden Enden an seitlichen Längsträgern der Fahrgastzelle verbunden ist.

Auf diesem Querträger stützen sich vorzugsweise die vorderen Sitze ab, die somit ebenfalls zu dem Frontmodul des Kraftfahrzeuges gehören.

Erfindungsgemäß ist das Frontmodul neben seiner Klebeverbindung entlang der Begrenzungslinien am Bodenteil und an den seitlichen Rändern in an sich bekannter Weise an mehreren Punkten der Fahrgastzelle kraftschlüssig befestigt, wobei die Befestigungspunkte jeweils nahe der seitlichen Begrenzung des Bodenteils sowie nahe der unteren Ecken der Windschutzscheibenöffnung angeordnet sind.

Um insbesondere die Befestigungspunkte nahe der unteren Ecken der Windschutzscheibenöffnung bei der Montage zugänglich zu machen, sind in der Außenhaut des Frontmoduls über diesen Punkten mit Klappen versehene Öffnungen vorgesehen, welche gleichzeitig als Wartungsöffnungen für darunter befindliche Aggregate, wie z. B. eine Scheibenwaschanlage, eine Klimaanlage, die Scheinwerfer oder dergleichen, dienen.

Ausführungsbeispiele der Erfindung sind nachstehend anhand von Zeichnungen näher beschrieben. Es zeigen:
- Fig. 1:: eine Fahrgastzelle eines erfindungsgemäßen Kraftfahrzeuges in perspektivischer Ansicht;
- Fig. 2:: ein Frontmodul eines erfindungsgemäßen Kraftfahrzeuges in perspektivischer Ansicht;

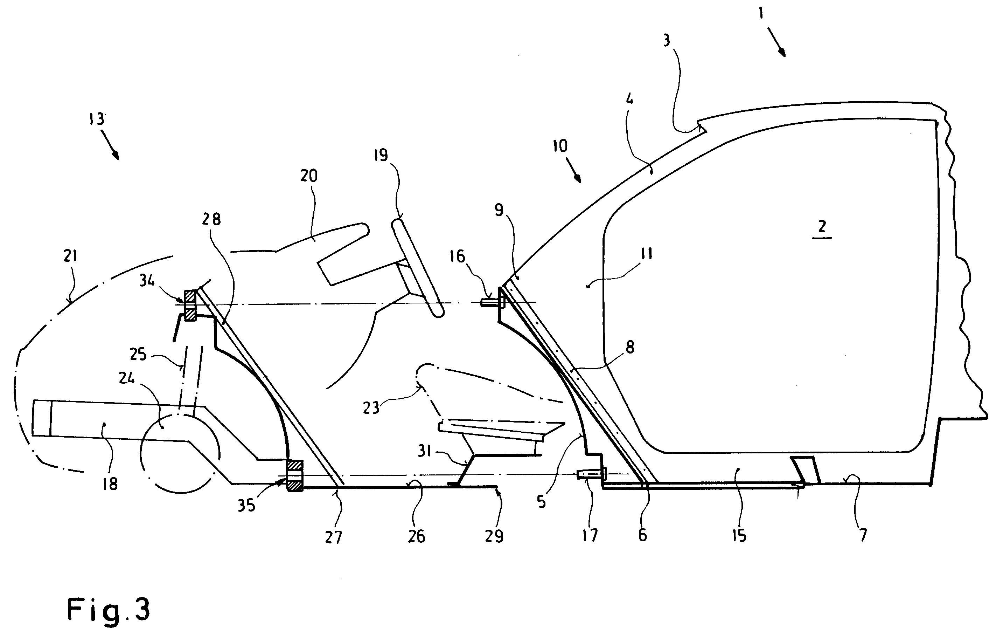

- Fig. 3:: eine schematisierte Seitenansicht des Frontmoduls und der Fahrgastzelle;
- Fig. 4:: eine schematisierte Draufsicht auf Frontmodul und Fahrgastzelle in der Anordnung gemäß Figur 3;
- Fig. 5:: einen Schnitt entlang der Linie A - A in Figur 4 in schematisierter Form;
- Fig. 6:: eine Draufsicht analog Figur 4 eines anderen Ausführungsbeispiels;
- Fig. 7:: einen Schnitt entlang der Linie B - B in Figur 4 in vergrößerter Darstellung;
- Fig. 8:: einen Schnitt entlang der Linie C - C in Figur 4 in vergrößerter Darstellung;
- Fig. 9:: eine Teilansicht von schräg vorn auf ein erfindungsgemäßes Kraftfahrzeug;
- Fig. 10:: den schematisierten Schnitt entlang der Linie D - D in Figur 9.

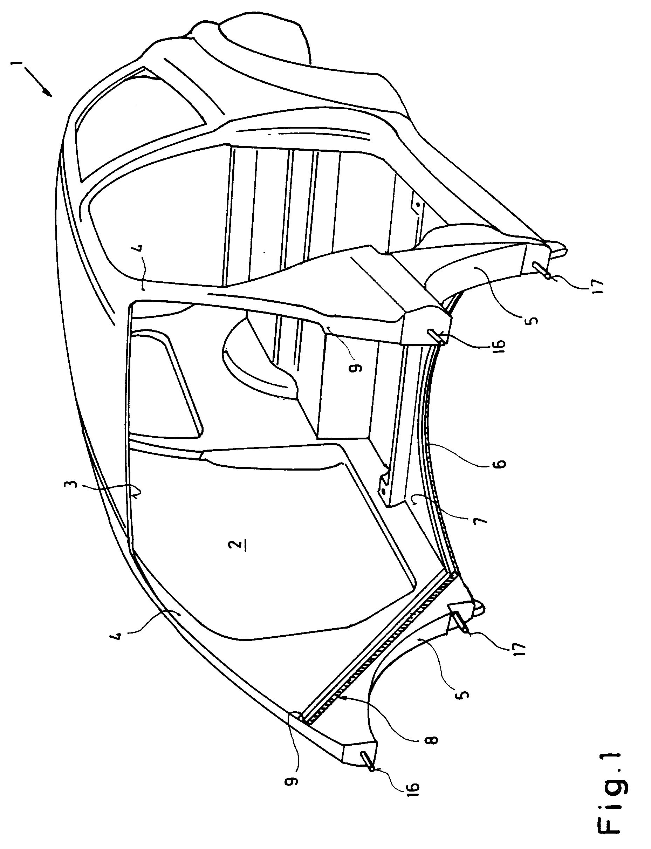

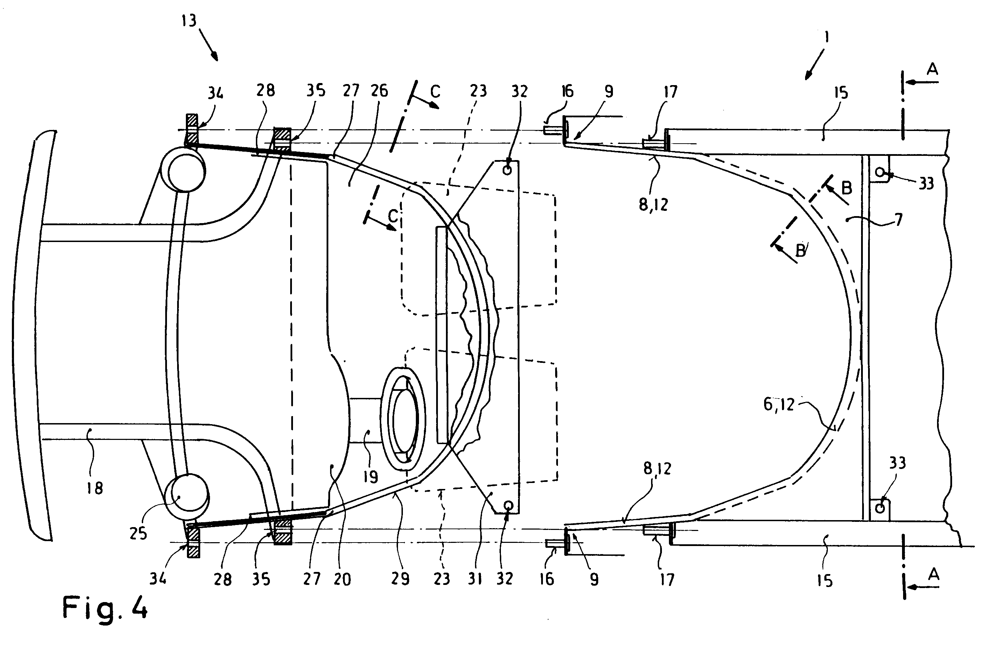

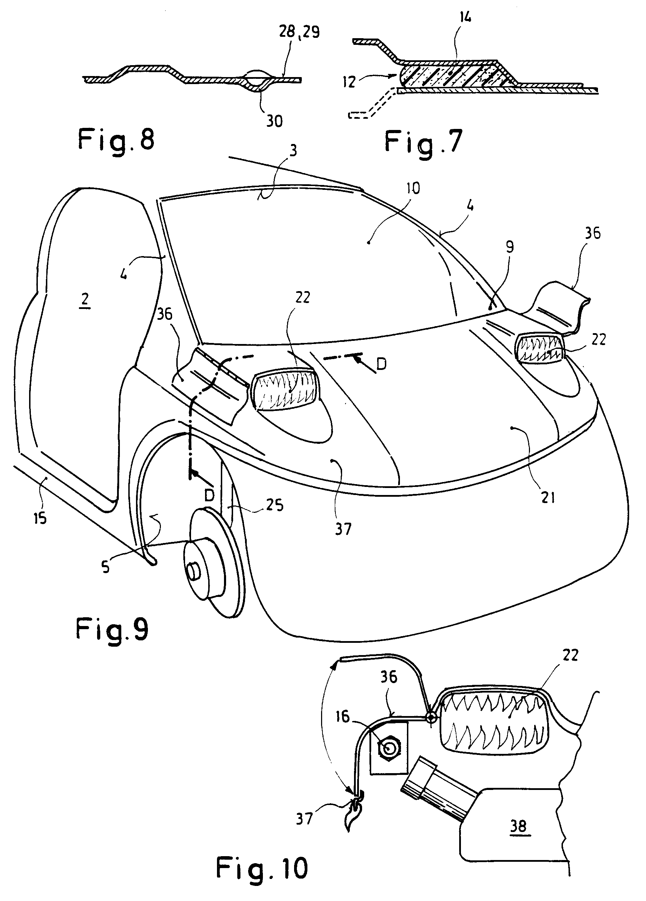

Eine Fahrgastzelle 1, welche seitliche Türöffnungen 2 aufweist und ein nicht dargestelltes Heckmodul trägt, ist nach vorn offen. Die vordere Öffnung ist begrenzt von der oberen Windschutzscheibenbegrenzung 3, den Windlaufsäulen 4, den hinteren Begrenzungen 5 der vorderen Radausschnitte sowie einen in die Fahrgastzelle 1 hineinragenden Begrenzungsrand 6, 6' des Bodens 7 der Fahrgastzelle 1. Der Begrenzungsrand 6 ist vorteilhafterweise kreisbogenförmig ausgeführt, wobei sich der Kreisbogen von seitlichen Rändern 8 ausgehend in den Boden 7 erstreckt, wie dies die Figuren 1, 2 und 4 darstellen. Die seitlichen Ränder 8, die sich vom Boden 7 zu den unteren Ecken 9 der Windschutzscheibenöffnung 10 erstrecken, sind vorzugsweise geradlinig geformt und von den Seitenteilen 11 der Fahrgastzelle 1 nach außen abgedeckt. Sowohl der Begrenzungsrand 6 des Bodens 7 als auch die seitlichen Ränder 8 sind als Klebekanal 12 ausgebildet (Figur 7), der vor dem Zusammenbau der Fahrgastzelle 1 mit einem Frontmodul 13 in an sich bekannter Weise mit Kleber 14 gefüllt wird. Nahe der unteren Ecken 9 der Windschutzscheibenöffnung 10 sowie in Verlängerung von seitlichen Längsträgern 15 sind an der Fahrgastzelle 1 Bolzen 16 und 17 für eine kraftschlüssige Befestigung des Frontmoduls 13 vorgesehen.

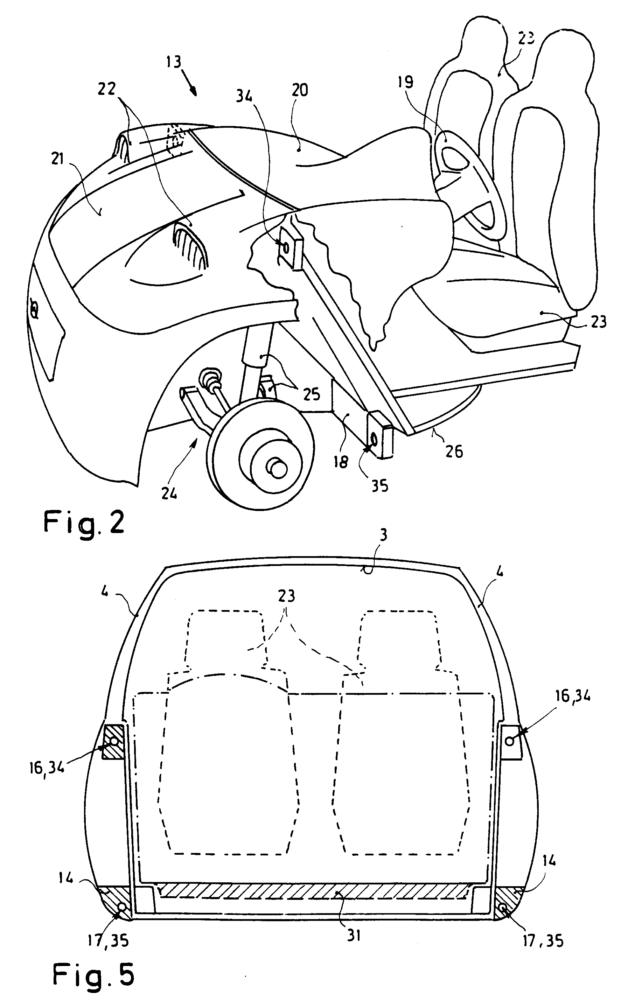

In Figur 2 ist ein Frontmodul 13 dargestellt. Dieses wird unter Einbeziehung von tragenden Elementen 18, einem Pedal- und Lenksystem 19, einer kompletten Armaturentafel 20 mit Heizungs-, Lüftungs- und eventuell Klimasystem, einer Fronthaube 21, den Scheinwerfern 22, eventuell einem Ersatzrad, dem erforderlichen Dämmaterial und Bodenbelägen, den vorderen Sitzen 23, dem Vorderachssystem 24 mit den Radaufhängungen 25 und, - bei Frontantrieb -, auch mit dem Antriebsaggegrat, bestehend aus Motor und Getriebe, vormontiert. Bei einem heckgetriebenen Kraftfahrzeug wird das Antriebsaggregat von einem Heckmodul aufgenommen. Mit den tragenden Elementen 18 verbunden ist ein Bodenteil 26. Beiderseits einer äußeren Begrenzung 27 des Bodenteils 26 verläuft schräg nach vorn oben bis in den Bereich der unteren Ecke 9 der Windschutzscheibenöffnung 10 eine Klebekante 28, die sich als Bodenklebekante 29 auch am gesamten nach hinten freien Bodenteil 26 fortsetzt. Die Klebekante 28 bzw. Bodenklebekante 29 ist in an sich bekannter Weise mit Zentrierwarzen 30 versehen (Figur 8). Das Bodenteil 26 entspricht in seiner äußeren Form der durch den Begrenzungsrand 6 des Bodens 7 der Fahrgastzelle 1 vorgegebenen Form. Es erstreckt sich soweit nach hinten, daß darauf ein Querträger 31 Raum findet, auf welchem die vorderen Sitze 23 aufgesetzt sind. Der Querträger 31 ist an seinen äußeren Enden mit Mitteln 32 zur Befestigung an den Längsträgern 15, und zwar an den Stellen 33, versehen. Die Klebekanten 28 entsprechen in ihrem Verlauf den seitlichen Rändern 8 bzw. dem daran entlang führenden Klebekanal 12 der Fahrgastzelle 1. Der Anordnung der Bolzen 16, 17 an der Fahrgastzelle 1 entsprechen Bolzenaufnahmen 34, 35 am Frontmodul 13.

Werden Fahrgastzelle 1 und Frontmodul 13 zusammengefügt, dann wird die Begrenzung 27 des Bodenteils 26 des Frontmoduls 13 mit der Bodenklebekante 29 in den Klebekanal 12 am Begrenzungsrand 6 des Bodens 7 der Fahrgastzelle 1 geschoben. Gleichzeitig werden auch die Klebekanten 28 des Frontmoduls 13 in die Klebekanäle 12 der seitlichen Ränder 8 an der Fahrgastzelle 1 geschoben. Dabei fügen sich auch die Bolzen 16 und 17 in die Bolzenaufnahmen 34 und 35. Infolge der kreisbogenförmigen Begrenzung des Bodens 7 der Fahrgastzelle 1 am Begrenzungsrand 6 und damit am Klebekanal 12 sowie des Bodenteils 26 des Frontmoduls 13 entlang der Begrenzung 27 und damit der Klebekante 28 kann sich das Frontmodul 13 beim Verschrauben der Bolzen 16, 17 in den Bolzenaufnahmen 34, 35 in seiner Klebeverbindung unproblematisch ausrichten. Durch diese vorteilhafte Gestaltung gleichen sich unvermeidliche Fertigungstoleranzen aus.

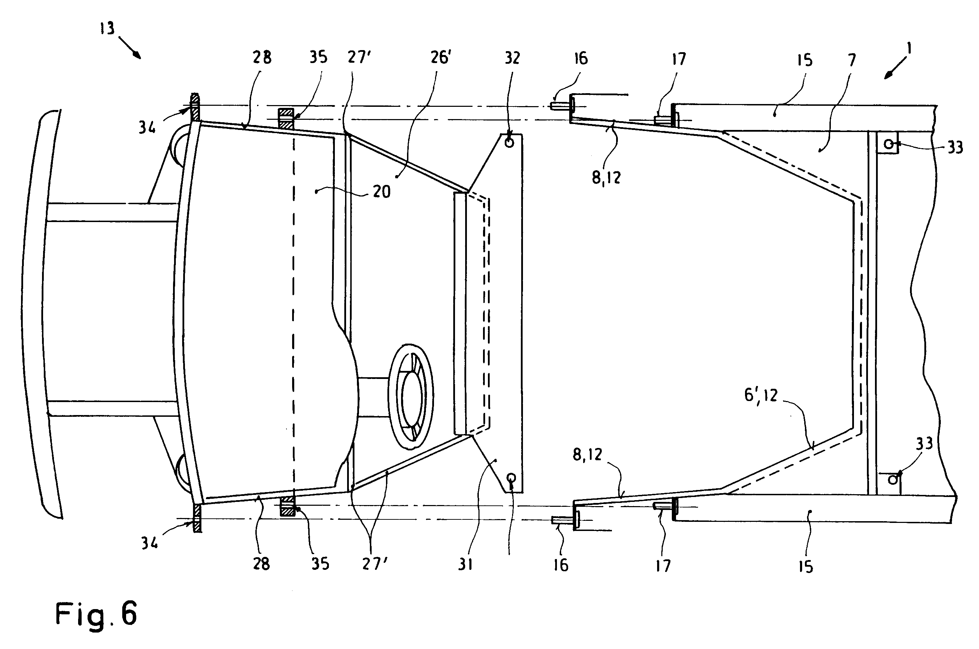

Eine andere vorteilhafte Ausführungsform der Erfindung ist in Figur 6 dargestellt. Bei dieser ist das Bodenteil 26' des Frontmoduls 13 trapezförmig ausgeführt, und zwar derart, daß die größere Basis des Trapezes unmittelbar unterhalb der Armaturentafel 20 liegt und die kleinere Basis des Trapezes im Inneren der Fahrgastzelle 1 liegt. Der Boden 7 der Fahrgastzelle 1 ist dementsprechend mit einer trapezförmigen Aussparung versehen, d. h., der Begrenzungsrand 6' umgrenzt das gleiche Trapez, wie dies von der Bodenklebekante 29 des Bodenteils 26' des Frontmoduls 13 geschieht. Auch bei einer solchen Ausführung ist eine gute Montage gewährleistet, da die Bodenklebekante 29 lediglich über eine kurze Strecke bewegt werden muß, um auch an den seitlichen Bereichen vollständig in den Klebekanal 12 einzutauchen.

Die endgültige kraftschlüssige Verbindung zwischen der Fahrgastzelle 1 und dem Frontmodul 13 erfolgt nach dem Fügen der Klebekanten 28 und der Bodenklebekante 29 mit dem Klebekanal 12 durch Verschrauben der Bolzen 16 und 17 an den Bolzenaufnahmen 34 und 35. Dabei sind die Bolzen 17 in der Bolzenaufnahme 35 von unten her gut erreichbar. Um auch die Bolzen 16 an der Bolzenaufnahme 34 an dem an sich sonst fertig montierten Frontmodul 13 zugänglich zu machen, sind nahe der unteren Ecken 9 der Windschutzscheibenöffnung 10 Klappen 36 in der Außenhaut 37 des Frontmoduls 13 vorgesehen (Figur 9 und 10). Diese Klappen 36 ermöglichen bei der Montage einen unbehinderten Zugriff auf die Verschraubung der Bolzen 16. Gleichzeitig können diese Klappen 36 als Serviceöffnung genutzt werden, um beispielsweise an die Rückseiten der Scheinwerfer 22 zum Auswechseln von Lampen zu gelangen oder den Flüssigkeitsbehälter 38 einer Scheibenwaschanlage auffüllen zu können.

Bei einem Kraftfahrzeug nach der Erfindung kann ein Frontmodul auch für einen Personenkraftwagen einschließlich der vorderen Sitze komplett außerhalb des Fahrzeuges vormontiert werden. Trotzdem wird ein ausreichend steifer Fahrzeugkörper erzielt. Die Erfindung ermöglicht so eine erheblich einfachere Montage von insbesondere Personenkraftwagen gegenüber den bisher bekannten Modulbauweisen.

## Patentansprüche

1. Kraftfahrzeug in Modulbauweise, bei dem ein Frontmodul (13) eine Fahrgastzelle (1) nach vorn abschließt, das Frontmodul (13) und die Fahrgastzelle (1) punktuell kraftschlüssig miteinander verbunden sind und das Frontmodul (13) zumindest die am vorderen Teil des Fahrzeuges untergebrachten Fahrwerks- und Bedienungsaggregate enthält, dadurch gekennzeichnet, daß das Frontmodul (13) den Bereich von Unterkante Windschutzscheibenöffnung (10) bis in den Bereich des Bodens (7) der Fahrgastzelle (1) einschließlich des vorderen Bodenteiles (26, 26') und der darauf befindlichen vorderen Sitze (23) umfaßt, der Begrenzungsrand (27, 27') des Bodenteils (26, 26') des Frontmoduls (13) sowie seitliche Klebekanten (28), die sich vom Bodenteil (26, 26') zum Bereich der unteren Ecken (9) der Windschutzscheibenöffnung (10) erstrecken, mit der Fahrgastzelle (1) in an sich bekannter Weise mittels einer entlang des Begrenzungsrandes (6, 6') und der seitlichen Ränder (8) verlaufenden Klebekante (28, 29) verbunden sind.

2. Kraftfahrzeug nach Anspruch 1, dadurch gekennzeichnet, daß die Klebeverbindung in an sich bekannter Weise aus einem Kleber (14) enthaltenden Klebekanal (12) an der einen Klebekante und einen in den Klebekanal (12) eingreifenden Steg an der anderen Klebekante (28, 29) besteht.

3. Kraftfahrzeug nach Anspruch 1 und 2, dadurch gekennzeichnet, daß der den Bodenteil (26) umfassende Steg sowie der dazugehörige Teil des Klebekanals (12) in einer Ebene angeordnet und kreisbogenförmig ausgeführt sind, wobei sich der Kreisbogen von den unteren Begrenzungen der seitlichen Ränder (8) in den Boden (7) der Fahrgastzelle (1) erstreckt.

4. Kraftfahrzeug nach Anspruch 1 und 2, dadurch gekennzeichnet, daß der Bodenteil (26') in Draufsicht trapezförmig mit der größeren Basis zwischen den unteren Begrenzungen der seitlichen Ränder (8) ausgebildet ist und sich mit der kleineren Basis in den Boden (7) der Fahrgastzelle (1) erstreckt.

5. Kraftfahrzeug nach Anspruch 1 bis 4, dadurch gekennzeichnet, daß auf dem hinteren Ende des sich in die Fahrgastzelle (1) erstreckenden Bodenteiles (26, 26') ein Querträger (31) befestigt ist, welcher seitlich über dem Bodenteil (26, 26') herausstehend mit seitlichen Längsträgern (15) der Fahrgastzelle (1) verbunden ist.

6. Kraftfahrzeug nach Anspruch 5, dadurch gekennzeichnet, daß der Querträger (31) die vorderen Sitze (23) trägt.

7. Kraftfahrzeug nach Anspruch 1 bis 6, dadurch gekennzeichnet, daß das Frontmodul (13) in an sich bekannter Weise an mehreren Punkten (Bolzen 16, 17) der Fahrgastzelle (1) kraftschlüssig befestigt ist, wobei die Befestigungspunkte der Fahrgastzelle (1) jeweils nahe der seitlichen Begrenzung des Bodens (7) sowie nahe der unteren Ecken (9) der Windschutzscheibenöffnung (10) und die Befestigungspunkte (Bolzenaufnahmen 34, 35) des Frontmoduls (13) nahe der seitlichen Begrenzung des Bodenteils (26, 26') sowie ebenfalls nahe der unteren Ecken (9) der Windschutzscheibenöffnung (10) angeordnet sind.

8. Kraftfahrzeug nach Anspruch 1 bis 7, dadurch gekennzeichnet, daß die Befestigungspunkte (Bolzenaufnahmen 34, 35) am Frontmodul (13) nahe der unteren Ecken (9) der Windschutzscheibenöffnung (10) durch Klappen (36) in der Außenhaut (37) des Frontmoduls (13) abgedeckt sind, welche gleichzeitig einen Zugang für Aggregate unterhalb der Außenhaut (37) bilden.

## Claims

1. Automobile in modular design, in which a passenger compartment (1) is closed off towards the front by a front module (13), the front module (13) and the passenger compartment (1) are connected to each other at points in a force-locking manner and the front module (13) contains at least the drive and operating units accommodated in the front part of the vehicle, **characterised** in that the front module (13) includes the region from the lower edge of the windscreen opening (10) up to the region of the floor (7) of the passenger compartment (1) including the front floor part (26, 26') and the front seats (23) situated thereon, the peripheral edge (27, 27') of the floor part (26, 26') of the front module (13) as well as lateral adhesive edges (28), which extend from the floor part (26, 26') to the region of the lower edges (9) of the windscreen opening (10), are connected to the passenger compartment (1) in a known manner by means of an adhesive edge (28, 29) running along the peripheral edge (6, 6') and the lateral edges (8).

2. Automobile according to claim 1, **characterised** in that the adhesive connection on one adhesive edge consists in a known manner of an adhesive channel (12) containing an adhesive (14) and on the other adhesive edge (28, 29) consists of a web engaging in the adhesive channel (12).

3. Automobile according to claim 1 and 2, **characterised** in that the web comprising the floor part (26) as well as the associated part of the adhesive channel (12) are arranged in one plane and constructed in a circular arc, wherein the circular arc extends from the lower limitations of the lateral edges (8) into the floor (7) of the passenger compartment (1).

4. Automobile according to claim 1 and 2, **characterised** in that when viewed from above the floor part (26') is constructed trapezoidally with the larger base between the lower limitations of the lateral edges (8) and with the smaller base extending into the floor (7) of the passenger compartment (1).

5. Automobile according to claim 1 to 4, **characterised** in that on the rearward end of the floor part (26, 26') extending into the passenger compartment (1) is secured a transverse support (31) which is connected to lateral longitudinal supports (15) of the passenger compartment (1) so as to project laterally beyond the floor part (26, 26').

6. Automobile according to claim 5, **characterised** in that the transverse support (31) carries the front seats (23).

7. Automobile according to claim 1 to 6, **characterised** in that the front module (13) is secured in a force-locking manner known per se at various points (bolts 16, 17) of the passenger compartment (1), wherein the securing points of the passenger compartment (1) are arranged in each case close to the lateral limitation of the floor (7) as well as close to the lower corners (9) of the windscreen opening (10) and the securing points (bolt receptacles 34, 35) of the front module (13) are arranged close to the lateral limitation of the floor part (26, 26') as well as close to the lower corners (9) of the windscreen opening (10).

8. Automobile according to claim 1 to 7, **characterised** in that the securing points (bolt receptacles 34, 35) on the front module (13) close to the lower corners (9) of the windscreen opening (10) are covered by flaps (36) in the outer skin (37) of the front module (13), which at the same time form an access to units located beneath the outer skin (37).

## Revendications

1. Véhicule automobile de conception modulaire, dans lequel un module avant (13) ferme vers l'avant un habitacle (1) pour les passagers, le module avant (13) et l'habitacle (1) étant reliés entre eux de manière ponctuelle par serrage et le module avant (13) comprenant au moins les éléments de train de roulement logés dans la partie avant du véhicule et les organes de commande, caractérisé par le fait que le module avant (13) englobe la région allant du bord inférieur de l'ouverture (10) de pare-brise jusqu'à la région du plancher (7) de l'habitacle (1), y compris la partie de plancher (26, 26') antérieure et les sièges avant (23) fixés sur celle-ci, que le bord (27, 27') délimitant la partie plancher (26, 26') du module avant (13) ainsi que les bords latéraux (28) de collage qui s'étendent entre la partie plancher (26, 26') jusque dans la région des angles (9) inférieurs de l'ouverture de pare-brise (10) sont liés de manière connue en soi à l'habitacle (1) au moyen d'un bord de collage (28, 29) qui s'étend le long du bord (6, 6') et des bords latéraux (8).

2. Véhicule automobile selon la revendication 1, caractérisé par le fait que la liaison par collage se compose de manière connue en soi d'un canal (12) de collage contenant un adhésif (14) sur l'un des bords de collage et d'une nervure qui pénètre dans ledit canal de collage (12) sur l'autre bord de collage (28, 29).

3. Véhicule automobile selon la revendication 1 et la revendication 2, caractérisé par le fait que le rebord qui entoure le partie plancher (26) ainsi que la partie correspondante du canal de collage (12) sont disposés dans un plan et ont une forme d'arc de cercle, l'arc de cercle s'étendant depuis les limites inférieures des bords (8) latéraux jusque dans le plancher (7) de l'habitacle (1).

4. Véhicule automobile selon la revendication 1 et la revendication 2, caractérisé par le fait que la partie plancher (26'), en vue de dessus, a la forme d'un trapèze dont la grande base est située entre les limites inférieures des bords latéraux (8) et dont la petite base s'étend dans le plancher (7) de l'habitacle (1).

5. Véhicule automobile selon les revendications 1 à 4, caractérisé par le fait qu'une traverse (31) est fixée à l'extrémité arrière de la partie plancher (26, 26') à l'intérieur de l'habitacle, laquelle traverse fait saillie latéralement au-delà de la partie plancher (26, 26') et est liée à des longerons (15) latéraux de l'habitacle (1).

6. Véhicule automobile selon la revendication 5, caractérisé par le fait que la traverse (31) porte les sièges avant (23).

7. Véhicule automobile selon les revendications 1 à 6, caractérisé par le fait que le module avant (13) est fixé par serrage en plusieurs points (boulons 16, 17) de l'habitacle (1), les points de fixation de l'habitacle (1) étant disposés chaque fois dans le voisinage du bord latéral du plancher (7) et dans le voisinage des angles inférieurs (9) de l'ouverture (10) de pare-brise et les points de fixation (logements des boulons 34, 35) du module avant (13) étant disposés dans le voisinage du bord latéral de la partie plancher (26, 26') et également dans le voisinage des angles inférieurs (9) de l'ouverture (10) de pare-brise.

8. Véhicule automobile selon les revendications 1 à 7, caractérisé par le fait que les points de fixation (logements des boulons 34, 35) sur le module avant (13) dans le voisinage des angles inférieurs (9) de l'ouverture (10) de pare-brise sont couverts par des volets (36) dans la tôle extérieure (37) du module avant (13) qui forment simultanément un accès aux accessoires disposés sous la tôle extérieure (37).
